# EUROPEAN PATENT APPLICATION

(11) **EP 4 811 353 A1**
(43) Date of publication of application: **23.09.2026**
(21) Application number: 25197643.7
(22) Date of filing: 22.08.2025
(51) Int. Cl.: G10L 15/26

(54) **METHOD FOR PROVIDING VIDEO COMMUNICATION SERVICE AND APPARATUS THEREOF**

(30) Priority: 20.03.2025 KR 20250036234; 21.07.2025 KR 20250098101
(71) Applicant: Samsung SDS Co., Ltd., Seoul 05510 (KR)
(72) Inventor: Kim, Youngkwang, 05510 Seoul (KR); Yoon, Heetae, 05510 Seoul (KR); Kang, Junho, 05510 Seoul (KR); Do, Myoungjin, 05510 Seoul (KR); Kang, Dongsik, 05510 Seoul (KR); Lee, Hyesu, 05510 Seoul (KR); Ha, Chaehyoung, 05510 Seoul (KR)
(74) Representative: Grünecker Patent- und Rechtsanwälte PartG mbB

(57) **Abstract**

The present disclosure relates to a method for providing a video communication service, which includes: configuring a personal language corresponding to each of a plurality of user terminals; receiving media data from a first user terminal among the plurality of user terminals; performing speech recognition on audio data included in the media data; detecting a personal language of remaining user terminals except the first user terminal; and translating a speech recognition result of the audio data, based on the detected personal language.

## Description

### [Technical Field]

The present disclosure relates to a technology for providing a video communication service and, more particularly, to a method for providing real-time speech recognition and translation functions in multi-party video communication and an apparatus therefor.

### [Background Art]

With the recent development of information and communication technology, online video communication systems are being widely utilized. A video communication system includes a plurality of user terminals that performs video communication and a server that relays data transmission/reception between the plurality of user terminals. In the system, each user terminal transmits media data (i.e., video/audio data) to the server, and the server transmits the received media data to another user.

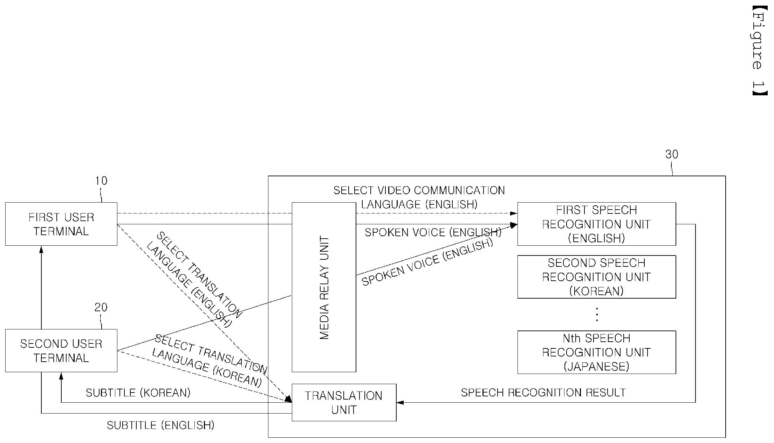

A conventional video communication system provides speech recognition and translation functions in multi-party video communication. For example, as illustrated in FIG. 1, a user terminal 10 establishing video communication connects to a server 30 and configures a video communication language (i.e., a speech recognition language) for each video communication. User terminals 10 and 20 participating in the video communication each connect to the server 30 and configure a translation language. When the video communication language and the translation language are completely configured, the server 30 performs speech recognition of a conversation between users using a speech recognition model corresponding to the preset video communication language, translates a speech recognition result into the preset translation language, and provides a translation result to the corresponding user terminals 10 and 20.

However, in the conventional video communication system, since a single video communication language is configured for each video communication, it is impossible to recognize two or more languages simultaneously in the same video communication. In addition, since a video communication language and a translation language need be designated separately, users have inconvenience of needing to separately configure a video communication language and a translation language every time a video communication is performed.

### [Disclosure]

### [Technical Problem]

The present disclosure has been made in order to solve the above-mentioned problems and other problems. An aspect of the present disclosure is to provide a method for configuring a personal language to be used in video communication for each user without needing to separately designating a video communication language and a translation language and an apparatus therefor.

Another aspect of the present disclosure is to provide a method for providing real-time speech recognition and translation functions based on a preset personal language for each user in multi-party video communication and an apparatus therefor.

### [Technical Solution]

In view of the foregoing aspects, according to an embodiment of the present disclosure, there is provided a method for providing a video communication service, and the method may include: configuring a personal language corresponding to each of a plurality of user terminals; receiving media data from a first user terminal among the plurality of user terminals; performing speech recognition on audio data included in the media data; detecting a personal language of remaining user terminals except the first user terminal; and translating a speech recognition result of the audio data, based on the detected personal language.

According to another embodiment of the present disclosure, there is provided a computing device including one or more processors that execute a plurality of operations for providing a video communication service and one or more memories that store a plurality of commands to execute the plurality of operations, and the plurality of operations may include: an operation of configuring a personal language corresponding to each of a plurality of user terminals; an operation of receiving media data from a first user terminal among the plurality of user terminals; an operation of performing speech recognition on audio data included in the media data; an operation of detecting a personal language of remaining user terminals except the first user terminal; and an operation of translating a speech recognition result of the audio data, based on the detected personal language.

According to still another embodiment of the present disclosure, there is provided a computer-readable storage medium storing instructions configured, when executed by the processor, to cause a device including a processor to implement a specific operation for providing a video communication service, and the specific operation may include: an operation of configuring a personal language corresponding to each of a plurality of user terminals; an operation of receiving media data from a first user terminal among the plurality of user terminals; an operation of performing speech recognition on audio data included in the media data; an operation of detecting a personal language of remaining user terminals except the first user terminal; and an operation of translating a speech recognition result of the audio data, based on the detected personal language.

Preferably, the method or the operation may further include storing information about the configured personal language in a storage.

Preferably, the personal language may be a language for each terminal user to use in video communication.

Preferably, the personal language may be configured manually through a selection command of each terminal user.

Preferably, the personal language may be configured automatically based on pieces of information related to each terminal user.

Preferably, the pieces of information related to the terminal user may include at least one of preset personal language information, display language information about a video communication program, language information about an operating system (OS) of a terminal, and language information about a region based on an IP address of a network device.

Preferably, the performing of the speech recognition may include: detecting a personal language of the first user terminal; selecting a speech recognition model corresponding to the detected personal language among a plurality of speech recognition models; and performing speech recognition on the audio data by using the selected speech recognition model.

Preferably, the performing of the speech recognition may include performing speech recognition on the audio data by using a multilingual speech recognition model.

Preferably, the configuring of the personal language may include: testing a microphone of the user terminals; performing speech recognition on a spoken voice input through the microphone by using the multilingual speech recognition model; and specifying a spoken language based on a result of the speech recognition and automatically configuring the personal language of the user terminals based on the specified spoken language.

Preferably, the method or the operation may further include transmitting a subtitle including a result of translating the audio data to the remaining user terminals.

Preferably, the subtitle may be transmitted as being included in media data.

### [Advantageous Effects]

Effects of a method for providing a video communication service and an apparatus therefor according to embodiments of the present disclosure are described below.

According to at least an embodiment of the present disclosure, a personal language to be used in video communications may be configured and managed for each user, thereby enabling simultaneous speech recognition of two or more languages spoken by a plurality of users in the same video communication.

Further, according to at least one of the embodiments of the present disclosure, a personal language to be used in video communications may be configured and managed for each user, thereby resolving inconvenience of users participating in video communication needing to separately configure a video communication language and a translation language whenever performing video communication.

Effects obtainable by the method for providing the video communication service and the apparatus therefor according to the embodiments are not limited to the effects mentioned above, and other effects not mentioned will be clearly understood by those skilled in the art from the following description.

### [Description of Drawings]

The accompanying drawings are included as a part of the detailed description to help the understanding of the present disclosure, and illustrate embodiments and the technical features of the present disclosure in conjunction with the detailed description, in which:
FIG. 1 illustrates a configuration of a video communication system according to a related art;
FIG. 2 illustrates a network environment according to an embodiment of the present disclosure;
FIG. 3 illustrates a configuration of a computing device according to an embodiment of the present disclosure;
FIG. 4 illustrates a configuration of a video communication system according to a first embodiment of the present disclosure;
FIG. 5 is a flowchart illustrating a method for providing a video communication service according to a first embodiment of the present disclosure;
FIG. 6 is a diagram for reference to illustrate a method for automatically configuring a personal language;
FIG. 7 illustrates a configuration of a video communication system according to a second embodiment of the present disclosure;
FIG. 8 is a flowchart illustrating a method for providing a video communication service according to a second embodiment of the present disclosure; and
FIG. 9 is a flowchart illustrating a method for configuring a personal language according to an embodiment of the present disclosure.

### [DETAILED DESCRIPTION OF THE INVENTION]

Hereinafter, embodiments disclosed herein will be described in detail with reference to the accompanying drawings, in which like or similar elements are denoted by like reference numerals regardless of drawing numerals and redundant descriptions thereof will be omitted. As used herein, the terms "module" and "unit" for components are given or interchangeably used only for ease in writing the specification and do not themselves have distinct meanings or functions. That is, the term "unit" used herein refers to software or a hardware component, such as FPGA or ASIC, and a "unit" performs certain functions. However, a "unit" is not limited to software or hardware. A "unit" may be configured to be in an addressable storage medium or may be configured to play one or more processors. Thus, in one example, a "unit" includes components, such as software components, object-oriented software components, class components, and task components, processes, functions, properties, procedures, subroutines, segments of a program code, drivers, firmware, a microcode, circuitry, data, a database, data structures, tables, arrays, and variables. Functions provided in components and "units" may be combined into a smaller number of components and "units" or may be further divided into additional components and "units."

When detailed descriptions about related known technology are determined to make the gist of embodiments disclosed herein unclear in describing the embodiments disclosed herein, the detailed descriptions will be omitted herein. In addition, it should be understood that the accompanying drawings are only for easy understanding of the embodiments disclosed herein, and technical ideas disclosed herein are not limited by the accompanying drawings but include all modifications, equivalents, or substitutes included in the spirit and technical scope of the disclosure.

The present disclosure proposes a method for configuring a personal language to be used in video communication for each user without needing to separately designating a video communication language and a translation language and an apparatus therefor. Further, the present disclosure proposes a method for providing real-time speech recognition and translation functions based on a preset personal language for each user in multi-party video communication and an apparatus therefor. Hereinafter, a personal language described herein refers to a language used by individual users participating in video communication, and a native language (i.e., a mother language) of the users may be representatively designated as a personal language. The personal language may be referred to as a preferred language.

Hereinafter, various embodiments of the present disclosure will be described in detail with reference to the drawings.

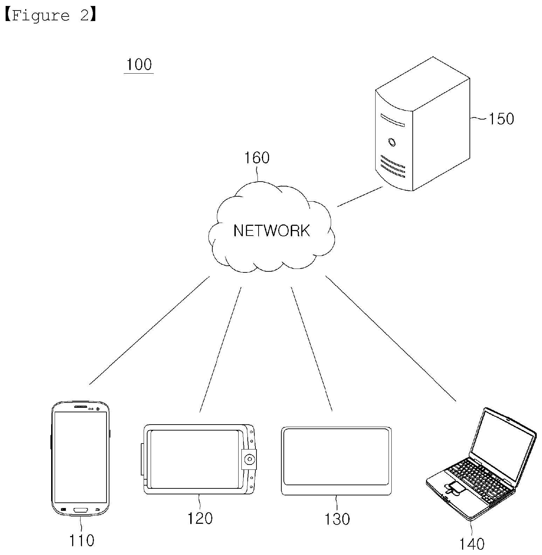

FIG. 2 illustrates a network environment according to an embodiment of the present disclosure.

Referring to FIG. 2, the network environment 100 according to the embodiment of the present disclosure may include a plurality of electronic devices 110, 120, 130, and 140, a server 150, and a network 160. The network environment 100 is an example for explaining the present disclosure, and the number of electronic devices or servers is not limited to that shown in FIG. 2. In addition, the network environment 100 merely shows one example of environments applicable to embodiments, and the environments applicable to the embodiments are not limited to the network environment 100 of FIG. 2.

The plurality of electronic devices 110, 120, 130, and 140 may be stationary terminals or mobile terminals configured as computing devices. Examples of the plurality of electronic devices 110, 120, 130, and 140 include a smartphone, a mobile phone, a navigation terminal, a laptop, a digital broadcasting terminal, a personal digital assistant (PDA), a portable multimedia player (PMP), a tablet PC, a desktop PC, and a wearable device. For example, FIG. 2 shows the shape of a smartphone as an example of an electronic device 110, but the electronic device 110 may refer to one of various physical computing device capable of communicating with other electronic devices 120, 130, and 140 and/or the server 150 via the network 160 by using a wireless or wired communication method in embodiments of the present disclosure. A video communication program or a video communication application may be installed in each of the electronic devices 110 to 140. Each electronic device 110 to 140 may provide a video communication service to a user through the video communication program or video communication application. The video communication service may include a voice communication service, a video phone service, a video conference service, and a video chat service, but is not necessarily limited thereto.

The communication method is not limited, and may include not only a communication method utilizing a communication network (e.g., a mobile communication network, wired Internet, wireless Internet, a broadcast network) that the network 160 but also short-range wireless communication between devices. For example, the network 160 may include any one or more networks among a personal area network (PAN), a local area network (LAN), a campus area network (CAN), a metropolitan area network (MAN), a wide area network (WAN), a broadband network (BBN), and the Internet. Further, the network 160 may include any one or more of network topologies including a bus network, a star network, a ring network, a mesh network, a star-bus network, and a tree or hierarchical network, but is not limited thereto.

The server 150 may be configured as a computing device or a plurality of computing devices that communicates with the plurality of electronic devices 110, 120, 130, and 140 via the network 160 to provide a command, a code, a file, content, a service, and the like. For example, the server 150 may be a system that provides a video communication service to the plurality of electronic devices 110, 120, 130, and 140 connected via the network 160.

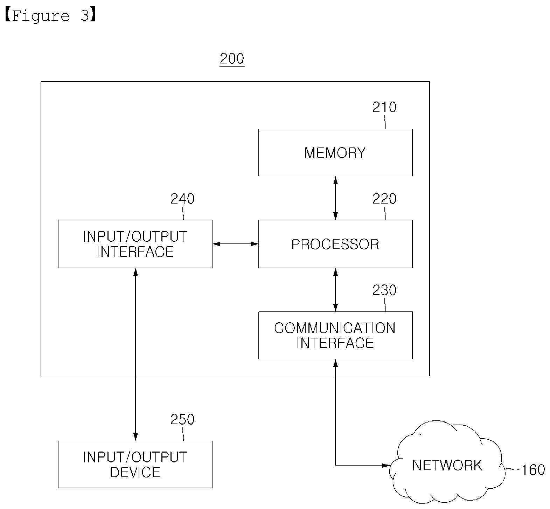

FIG. 3 illustrates a configuration of a computing device according to an embodiment of the present disclosure.

Referring to FIG. 3, the computing device 200 according to the embodiment of the present disclosure may include a memory 210, a processor 220, a communication interface 230, and an input/output interface 240. The computing device 200 may implement each of the plurality of electronic devices 110, 120, 130, and 140 or the server 150 described above.

The memory 210 is a computer-readable recording medium, and may include a permanent mass storage device, such as a random-access memory (RAM), a read-only memory (ROM), and a disk drive. The permanent mass storage device, such as the ROM and the disk drive, may be included in the computing device 200 as a permanent storage device separate from the memory 210. The memory 210 may store an operating system and at least one program code. These software components may be loaded into the memory 210 from a computer-readable recording medium separate from the memory 210. The separate computer-readable recording medium may include a computer-readable recording medium, such as a floppy drive, a disk, a tape, a DVD/CD-ROM drive, and a memory card. In another embodiment, the software components may be loaded into the memory 210 through the communication interface 230 rather than the computer-readable recording medium. For example, the software components may be loaded into the memory 210 of the computing device 200, based on a computer program installed by files received through the network 160.

The processor 220 may be configured to process a command of a computer program by performing basic arithmetic, logic, and input/output operations. The command may be provided to the processor 220 by the memory 210 or the communication interface 230. For example, the processor 220 may be configured to execute a command received according to a program code stored in a recording device, such as the memory 210.

The communication interface 230 may provide a function for the computing device 200 to communicate with other devices (e.g., the storage devices described above) via the network 160. For example, a request, a command, data, a file, and the like generated by the processor 220 of the computing device 200, such as the program code stored in the recording device, such as the memory 210, may be transmitted to other devices through the network 160 under control of the communication interface 230. Conversely, a signal, a command, data, a file, and the like from other devices may be received by the computing device 200 through the communication interface 230 of the computing device 200 via the network 160. A signal, a command, data, and the like received through the communication interface 230 may be transmitted to the processor 220 or the memory 210, and a file and the like may be stored in a storage medium (the foregoing permanent storage device) that the computing device 200 may further include.

The input/output interface 240 may be a system for interfacing with an input/output device 250. For example, an input device may include a device, such as a microphone, a keyboard, or a mouse, and the output device may include a device, such as a display or a speaker. In another example, the input/output interface 240 may be a system for interfacing with a device in which input and output functions are integrated, such as a touch screen. The input/output device 250 may be configured as a single device with the computing device 200.

In other embodiments, the computing device 200 may include fewer or more components than those illustrated in FIG. 3. However, it is not necessary to explicitly show most conventional components. For example, the computing device 200 may be configured to include at least part of the input/output device 250, or may further include other components, such as a transceiver or a database.

Hereinafter, specific embodiments of a video communication system, a device for providing a video communication service, and a method for providing a video communication service will be described. A device for providing a video communication service according to embodiments of the present disclosure may be configured in the electronic devices 110 to 140 and/or the server 150 of FIG. 2, and may be configured as at least one computing device 200. A method for providing a video communication service according to embodiments of the present disclosure may be performed through a device for providing a video communication service or at least one computing device included in the device for providing the video communication service. Here, a computer program according to an embodiment of the present disclosure may be installed and run in the computing device, and the computing device may perform the method for providing the video communication service according to the embodiments of the present disclosure under control of the run computer program. The computer program may be stored in a computer-readable recording medium to execute the method for providing the video communication service in a computer in combination with the computing device.

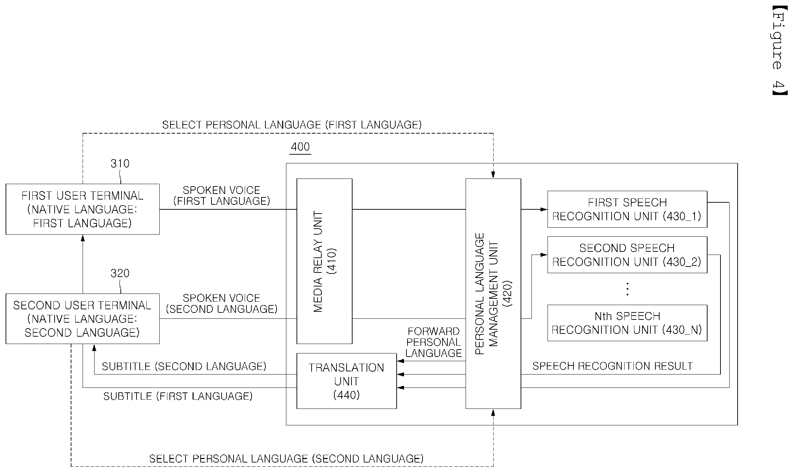

FIG. 4 illustrates a configuration of a video communication system according to a first embodiment of the present disclosure.

Referring to FIG. 4, the video communication system according to the first embodiment of the present disclosure may include a plurality of user terminals 310 and 320 performing video communication and a video communication server 400 relaying data transmission/reception between the plurality of user terminals 310 and 320. The video communication system is merely an example for explaining the disclosure, and the number of user terminals or the number of video communication servers is not limited as shown in FIG. 4.

The plurality of user terminals 310 and 320 may download and install a video communication program or a video communication application from the video communication server 400. The plurality of user terminals 310 and 320 may execute a pre-installed video communication program or video communication application to provide a video communication service for a plurality of users.

Each of the user terminals 310 and 320 may generate media data and provide the media data to the video communication server 400. In addition, each of the user terminals 310 and 320 may output media data received from the video communication server 400 on a display unit. Here, the media data may include at least one of video data and audio data.

When users participating in video communication use different languages, each of the user terminals 310 and 320 may receive a subtitle obtained by translating a speech recognition result of a counterpart's voice into a user's personal language from the video communication server 400. Each of the user terminals 310 and 320 may output the subtitle received from the video communication server 400 on the display unit.

Each of the user terminals 310 and 320 may be any one of the electronic devices 110 to 140 of FIG. 2. Furthermore, each of the user terminals 310 and 320 may be configured through the computing device 200 of FIG. 3.

The video communication server 400 may include a media relay unit 410, a personal language management unit 420, a plurality of speech recognition units 430_1 to 430_N, and a translation unit 440. The components illustrated in FIG. 4 are not essential to configure the video communication server, and thus the video communication server described herein may include more or fewer components than those listed above.

The media relay unit 410 may receive media data of a user from a user terminal 310, and may transmit the received media data to another user terminal 320.

The media relay unit 410 may extract audio data, based on media data received from the user terminals 310 and 320, and may provide the extracted audio data to the personal language management unit 420.

The personal language management unit 420 may configure a personal language of the users using the video communication service. The personal language may be manually configured by the users or automatically configured by the personal language management unit 420. Since the personal language needs to be configured only once when the video communication service is first used, there is no need to configure a personal language each time video communication is performed. Furthermore, the personal language may be changed according to a user configuration.

The personal language management unit 420 may store and manage personal language information about each user in a storage (not shown).

The personal language management unit 420 may determine a speech recognition unit 430 to which audio data received from the media relay unit 410 is assigned, based on the personal language information about each user.

For example, when a personal language of a first user is configured to a first language (e.g., English), the personal language management unit 420 may determine a first speech recognition unit 430_1 including a speech recognition model for the first language among the plurality of speech recognition units 430_1 to 430_N as a speech recognition unit to which a spoken voice of the first user is assigned. When a personal language of a second user is configured to a second language (e.g., Korean), the personal language management unit 420 may determine a second speech recognition unit 430_2 including a speech recognition model for the second language among the plurality of speech recognition units 430_1 to 430_N as a speech recognition unit to which a spoken voice of the second user is assigned.

The personal language management unit 420 may provide the audio data received from the media relay unit 410 to the determined speech recognition unit 430. The personal language management unit 420 may receive a speech recognition result of the audio data from the speech recognition unit 430.

The personal language management unit 420 may provide a speech recognition result of a specific user's audio data and personal language information about the users participating in the video communication to the translation unit 440.

Each of the plurality of speech recognition units 430_1 to 430_N may include a single speech recognition model. The single speech recognition model refers to an artificial intelligence (AI) model that recognizes a single language.

Each the speech recognition unit 430_1 to 430_N may perform speech recognition on audio data using a pre-learned speech recognition model. Each speech recognition unit 430_1 to 430_N may provide a speech recognition result of the audio data to the personal language management unit 420.

The translation unit 440 may receive a speech recognition result of a spoken voice of a specific user and the personal language information about the users participating in the video communication from the personal language management unit 420. The translation unit 440 may translate the speech recognition result of the spoken voice of the specific user into a personal language of the remaining users excluding the user.

The translation unit 440 may provide a subtitle including a translation result to the user terminals 310 and 320. Here, the translation unit 440 may provide the subtitle directly to the user terminals 310 and 320, or may provide the subtitle to the user terminals 310 and 320 via the media relay unit 410.

For example, when speech recognition is performed on a spoken voice of the first user, the translation unit 440 may translate a speech recognition result of the spoken voice of the first user into the personal language of the second user, and may provide a subtitle including a translation result to the second user terminal 320. When speech recognition is performed on a spoken voice of the second user, the translation unit 440 may translate a speech recognition result of the spoken voice of the second user into the personal language of the first user, and may provide a subtitle including a translation result to the first user terminal 310.

In this way, even though users speak in personal languages thereof in multi-party video communication, simultaneous speech recognition of two or more languages is possible, and the users may quickly understand content of counterparts speaking in different languages through real-time translated subtitles.

As described above, the video communication system according to the first embodiment of the present disclosure may configure and manage a personal language to be used in video communication for each user, thereby not only enabling simultaneous speech recognition of two or more languages spoken by a plurality of users in the same video communication but also resolving inconvenience of users participating in video communication needing to separately configure a video communication language and a translation language whenever performing video communication.

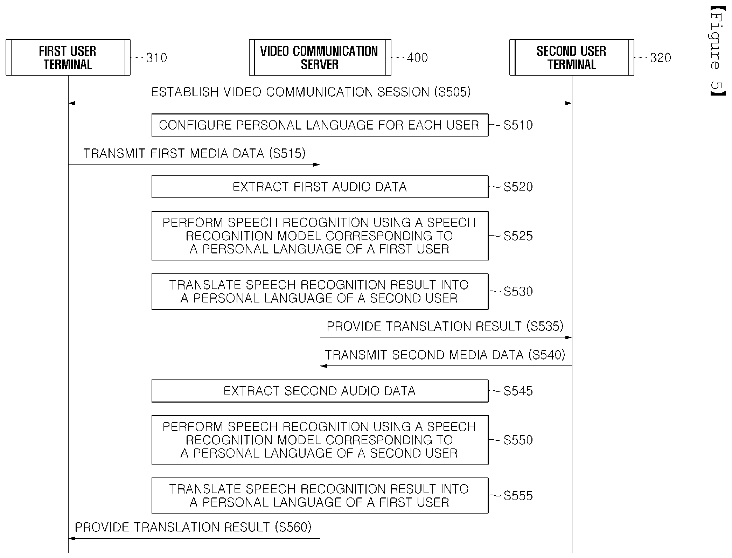

FIG. 5 is a flowchart illustrating a method for providing a video communication service according to a first embodiment of the present disclosure. The method for providing the video communication service according to the embodiment may be performed by the video communication server 400 that supports a plurality of single speech recognition models. Although the flowchart divides the method for providing the video communication service into a plurality of operations, at least some operations may be performed in a different order, be performed in combination with other operations, be omitted, or be divided into sub-operations, or one or more operations not shown may be added.

Referring to FIG. 5, the video communication server 400 according to the present disclosure may establish a video communication session with a plurality of user terminals 310 and 320 (S505).

When establishing the video communication session, the video communication server 400 may configure a personal language of users participating in video communication (S510).

For example, the video communication server 400 may configure a personal language of a user according to a selection command of the user.

In another example, the video communication server 400 may detect pieces of information related to a user, and may automatically configure a personal language of the user by using the detected pieces of information. The pieces of information related to the user may include personal language information about each user managed by a personal language management unit 420, display language information about a video communication program installed in a user terminal, language information about an operating system (OS) installed in the user terminal, and language information about a region based on an IP address of a network device.

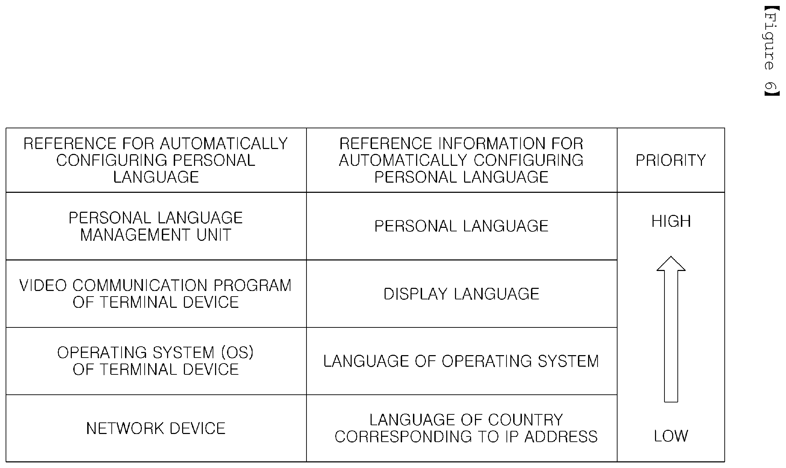

The video communication server 400 may automatically configure the personal language of the user by configuring a predetermined priority for the pieces of information related to the user. For example, as illustrated in FIG. 6, the video communication server 400 may automatically configure the personal language of the user by configuring priorities in an order of previously configured personal language information about the user, display language information about a video communication program, language information about an operating system (OS) of a terminal, and language information about a region (i.e., a country) based on an IP address.

The video communication server 400 may store the configured personal language information about each user in a storage.

The video communication server 400 may receive first media data from a first user terminal 310 (S515). The first media data may include at least one of video data and audio data.

The video communication server 400 may extract first audio data, based on the first media data received from the first user terminal 310 (S520).

The video communication server 400 may detect a personal language of a first user, based on the personal language information about each user stored in the storage.

The video communication server 400 may perform speech recognition on the extracted first audio data by using a speech recognition model corresponding to the personal language of the first user (S525).

The video communication server 400 may detect a personal language of a second user, based on the personal language information about each user stored in the storage.

The video communication server 400 may translate a speech recognition result of the first audio data into the personal language of the second user (S530).

The video communication server 400 may provide a subtitle including a translation result to a second user terminal 320 (S535). The subtitle may be transmitted within media data or separately from the media data.

The video communication server 400 may receive second media data from the second user terminal 320 (S540). Similarly, the second media data may include at least one of video data and audio data.

The video communication server 400 may extract second audio data, based on the second media data received from the second user terminal 320 (S545).

The video communication server 400 may perform speech recognition on the extracted second audio data by using a speech recognition model corresponding to the personal language of the second user (S550).

The video communication server 400 may translate a speech recognition result of the second audio data into the personal language of the first user (S555).

The video communication server 400 may provide a subtitle including a translation result to the first user terminal 310 (S560). Similarly, the subtitle may be transmitted within media data or separately from the media data.

The video communication server 400 may repeatedly perform operations 515 to 560 described above until the video communication session ends.

As described above, the method for providing the video communication service according to the first embodiment of the present disclosure may configure and manage a personal language to be used in video communication for each user, thereby not only enabling simultaneous speech recognition of two or more languages spoken by a plurality of users in the same video communication but also resolving inconvenience of users participating in video communication needing to separately configure a video communication language and a translation language whenever performing video communication.

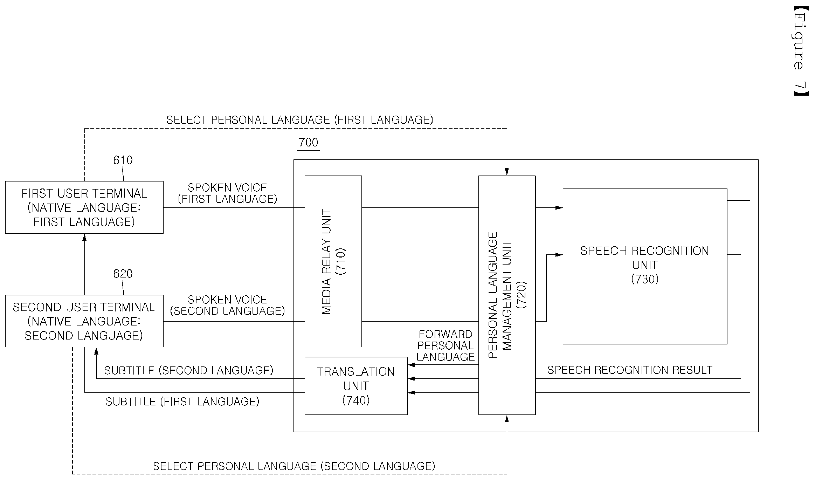

FIG. 7 illustrates a configuration of a video communication system according to a second embodiment of the present disclosure.

Referring to FIG. 7, the video communication system according to the second embodiment of the present disclosure may include a plurality of user terminals 610 and 620 performing video communication and a video communication server 700 relaying data transmission/reception between the plurality of user terminals 610 and 620. The video communication system is merely an example for explaining the disclosure, and the number of user terminals or the number of video communication servers is not limited as shown in FIG. 7.

The plurality of user terminals 610 and 620 may execute a previously installed video communication program or video communication application to provide a video communication service for a plurality of users.

Each of the user terminals 610 and 620 may generate media data and provide the media data to the video communication server 700. In addition, each of the user terminals 610 and 620 may output media data received from the video communication server 700 on a display unit.

When users participating in video communication use different languages, each of the user terminals 610 and 620 may receive a subtitle obtained by translating a speech recognition result of a counterpart's voice into a user's personal language from the video communication server 700. Each of the user terminals 610 and 620 may output the subtitle received from the video communication server 700 on the display unit.

The video communication server 700 may include a media relay unit 710, a personal language management unit 720, a speech recognition unit 730, and a translation unit 740. The components illustrated in FIG. 7 are not essential to configure the video communication server, and thus the video communication server described herein may include more or fewer components than those listed above.

Unlike the video communication server 400 according to the first embodiment, the video communication server 700 according to the present embodiment may include the single speech recognition unit 730. That is, the video communication server 700 may include a single multilingual speech recognition model rather than a plurality of single speech recognition models.

The media relay unit 710, the personal language management unit 720, and the translation unit 740 of the video communication server 700 are the same as or similar to the media relay unit 410, the personal language management unit 420, and the translation unit 440 of the video communication server 400 according to the first embodiment, and thus a detailed description thereof is omitted.

The media relay unit 710 may receive media data from a user terminal 610, and may transmit the received media data to another user terminal 620.

The media relay unit 710 may extract audio data, based on media data received from the user terminals 610 and 620, and may provide the extracted audio data to the personal language management unit 720. In another embodiment, the media relay unit 710 may provide the extracted audio data directly to the speech recognition unit 730.

The personal language management unit 720 may configure a personal language of the users using the video communication service. The personal language management unit 720 may store and manage preset personal language information about each user in a storage.

The personal language management unit 720 may provide the audio data received from the media relay unit 710 to the speech recognition unit 730. The personal language management unit 720 may receive a speech recognition result of the audio data from the speech recognition unit 730.

The personal language management unit 720 may provide a speech recognition result of a specific user's audio data and personal language information about the users participating in the video communication to the translation unit 740.

The speech recognition unit 730 may include a multilingual speech recognition model. The multilingual speech recognition model refers to an artificial intelligence (AI) model that recognizes a plurality of languages.

The speech recognition unit 730 may perform speech recognition on audio data using a pre-learned multilingual speech recognition model. The speech recognition unit 730 may provide a speech recognition result of the audio data to the personal language management unit 720.

The translation unit 740 may receive a speech recognition result of a spoken voice of a specific user and the personal language information about the users participating in the video communication from the personal language management unit 720. The translation unit 740 may translate the speech recognition result of the spoken voice of the specific user into a personal language of the remaining users excluding the user. The translation unit 740 may provide a subtitle including a translation result to the user terminals 610 and 620.

For example, when a personal language of a first user is configured to a first language (e.g., English), the personal language management unit 720 may receive audio data corresponding to a spoken voice of the first user from a first user terminal 610, and may provide the received audio data to the speech recognition unit 730. The personal language management unit 720 may obtain a speech recognition result of the spoken voice of the first user from the speech recognition unit 730, and may provide the obtained speech recognition result and personal language information about a second user to the translation unit 740. The translation unit 740 may translate the speech recognition result of the spoken voice of the first user into a personal language of the second user, and may provide a subtitle including a translation result to a second user terminal 620.

When the personal language of the second user is configured to a second language (e.g., Korean), the personal language management unit 720 may receive audio data corresponding to a spoken voice of the second user from the second user terminal 620, and may provide the received audio data to the speech recognition unit 730. The personal language management unit 720 may obtain a speech recognition result of the spoken voice of the second user from the speech recognition unit 730, and may provide the obtained speech recognition result and personal language information about the first user to the translation unit 740. The translation unit 740 may translate the speech recognition result of the spoken voice of the second user into the personal language of the first user, and may provide a subtitle including a translation result to the first user terminal 610.

In this way, even though users speak in personal languages thereof in multi-party video communication, simultaneous speech recognition of two or more languages is possible, and the users may quickly understand content of counterparts speaking in different languages through real-time translated subtitles.

As described above, the video communication system according to the second embodiment of the present disclosure may configure and manage a personal language to be used in video communication for each user, thereby not only enabling simultaneous speech recognition of two or more languages spoken by a plurality of users in the same video communication but also resolving inconvenience of users participating in video communication needing to separately configure a video communication language and a translation language whenever performing video communication.

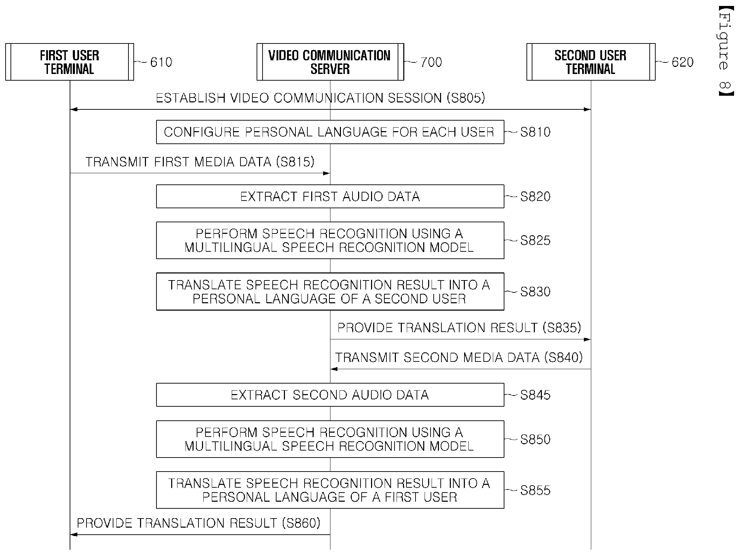

FIG. 8 is a flowchart illustrating a method for providing a video communication service according to a second embodiment of the present disclosure. The method for providing the video communication service according to the present embodiment may be performed by the video communication server 700 that supports a multilingual speech recognition model. Although the flowchart divides the method for providing the video communication service into a plurality of operations, at least some operations may be performed in a different order, be performed in combination with other operations, be omitted, or be divided into sub-operations, or one or more operations not shown may be added.

Referring to FIG. 8, the video communication server 700 according to the present disclosure may establish a video communication session with a plurality of user terminals 610 and 620 (S805).

When establishing the video communication session, the video communication server 700 may configure a personal language of users participating in video communication (S810). The video communication server 700 may configure a personal language of a user according to a selection command of the user. Further, the video communication server 700 may automatically configure a personal language of a user by using pieces of information related to the user.

The video communication server 700 may store configured personal language information about each user in a storage.

The video communication server 700 may receive first media data from a first user terminal 610 (S815). The first media data may include at least one of video data and audio data.

The video communication server 700 may extract first audio data, based on the first media data received from the first user terminal 610 (S820).

The video communication server 700 may perform speech recognition on the extracted first audio data by using a multilingual speech recognition model (S825).

The video communication server 700 may detect a personal language of a second user, based on the personal language information about each user stored in the storage.

The video communication server 700 may translate a speech recognition result of the first audio data into the personal language of the second user (S830).

The video communication server 700 may provide a subtitle including a translation result to a second user terminal 620 (S835). The subtitle may be transmitted within media data or separately from the media data.

The video communication server 700 may receive second media data from the second user terminal 620 (S840). Similarly, the second media data may include at least one of video data and audio data.

The video communication server 700 may extract second audio data, based on the second media data received from the second user terminal 620 (S845).

The video communication server 700 may perform speech recognition on the extracted second audio data by using the multilingual speech recognition model (S850).

The video communication server 700 may detect a personal language of a first user, based on the personal language information about each user stored in the storage.

The video communication server 700 may translate a speech recognition result of the second audio data into the personal language of the first user (S855).

The video communication server 700 may provide a subtitle including a translation result to the first user terminal 610 (S860). Similarly, the subtitle may be transmitted within media data or separately from the media data.

The video communication server 700 may repeatedly perform operations 815 to 860 described above until the video communication session ends.

As described above, the method for providing the video communication service according to the second embodiment of the present disclosure may configure and manage a personal language to be used in video communication for each user, thereby not only enabling simultaneous speech recognition of two or more languages spoken by a plurality of users in the same video communication but also resolving inconvenience of users participating in video communication needing to separately configure a video communication language and a translation language whenever performing video communication.

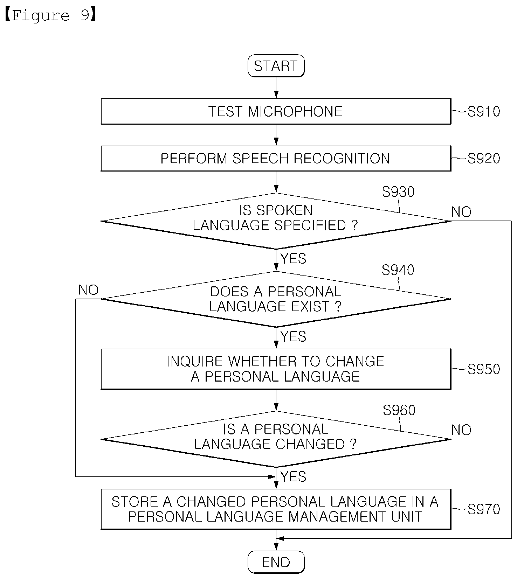

FIG. 9 is a flowchart illustrating a method for configuring a personal language according to an embodiment of the present disclosure. The method for configuring the personal language according to the embodiment may be performed by the video communication server 700 that supports a multilingual speech recognition model. Although the flowchart divides the method for configuring the personal language into a plurality of operations, at least some operations may be performed in a different order, be performed in combination with other operations, be omitted, or be divided into sub-operations, or one or more operations not shown may be added.

Referring to FIG. 9, the video communication server 700 according to the present disclosure may test a microphone of a user terminal when establishing a video communication session (S910). The video communication server 700 may provide a user interface (UI) for testing a microphone of a user terminal to the user terminal.

A user may perform a microphone test through the user interface displayed on the user terminal. Through a microphone test process, a spoken voice of the user may be input into the microphone of the user terminal. The user terminal may transmit audio data corresponding to the input spoken voice to the video communication server 700.

The video communication server 700 may perform speech recognition on the audio data received from the user terminal by using a multilingual speech recognition model (S920).

The video communication server 700 may identify whether a spoken language of the user is specified based on a speech recognition result (S930).

When the spoken language of the user is not specified as a result of identification in operation 930, the video communication server 700 may terminate an automatic personal language configuration process for the user.

When the spoken language of the user is specified as a result of the identification in operation 930, the video communication server 700 may access the personal language management unit 730 to identify whether a personal language of the user exists (S940).

When the personal language of the user does not exist as a result of identification in operation 940, the video communication server 700 may configure the spoken language of the user as the personal language of the user, and may store configured personal language information in the personal language management unit (S970).

When the personal language of the user exists as a result of the identification in operation 940, the video communication server 700 may transmit information inquiring whether to change the personal language of the user to the user terminal. The user terminal may receive information indicating whether to change the personal language from the user, and may transmit the received information to the video communication server 700.

The video communication server 700 may determine whether to change the personal language of the user, based on the information received from the user terminal (S960).

When the user changes the personal language, the video communication server 700 may change the personal language of the user to the spoken language of the user, and may store changed personal language information in the personal language management unit (S970).

When the user does not change the personal language, the video communication server 700 may maintain the personal language of the user as is.

As described above, the method for configuring the personal language according to the embodiment of the present disclosure may automatically configure a personal language of a user based on a spoken voice of the user when testing a microphone of a user terminal, thereby improving convenience of users using video communication.

The present disclosure described above can be realized as a computer-readable code in a medium recording a program. A computer-readable medium may keep storing a computer-executable program or may temporarily store the computer-executable program for execution or download. Further, the medium may include various recording devices or storage devices in a form in which a single piece or a plurality of pieces of hardware is combined and may be distributed on a network without being limited to a medium directly connected to a computer system. Examples of the medium may include those configured to store a program instruction including a magnetic medium, such as a hard disk, a floppy disk, and a magnetic tape, an optical recording medium, such as a CD-ROM and a DVD, a magneto-optical medium, such as a floptical disk, a ROM, a RAM, a flash memory, and the like. In addition, other examples of the medium may include an app store that distributes applications, a site that supplies or distributes various types of software, and a recording medium or a storage medium managed by a server. Therefore, the above detailed description should not be construed as restrictive in all aspects and should be considered as illustrative. The scope of the present disclosure should be determined based on reasonable interpretation of the appended claims, and all changes and modifications within the equivalent scope of the present disclosure are included in the scope of the disclosure.

## Claims

1. A method for providing a video communication service performed by a computing device, the method comprising:
configuring a personal language corresponding to each of a plurality of user terminals;
receiving media data from a first user terminal among the plurality of user terminals;
performing speech recognition on audio data included in the media data;
detecting a personal language of remaining user terminals except the first user terminal; and
translating a speech recognition result of the audio data, based on the detected personal language.

2. The method of claim 1, further comprising storing information about the configured personal language in a storage.

3. The method of claim 1, wherein the personal language is a language for each terminal user to use in video communication.

4. The method of claim 1, wherein the personal language is configured manually through a selection command of each terminal user.

5. The method of claim 1, wherein the personal language is configured automatically based on pieces of information related to each terminal user.

6. The method of claim 5, wherein the pieces of information related to the terminal user comprise at least one of preset personal language information, display language information about a video communication program, language information about an operating system (OS) of a terminal, or language information about a region based on an IP address of a network device.

7. The method of claim 1, wherein the performing of the speech recognition comprises:
detecting a personal language of the first user terminal;
selecting a speech recognition model corresponding to the detected personal language among a plurality of speech recognition models; and
performing speech recognition on the audio data by using the selected speech recognition model.

8. The method of claim 1, wherein the performing of the speech recognition comprises performing speech recognition on the audio data by using a multilingual speech recognition model.

9. The method of claim 8, wherein the configuring of the personal language comprises:
testing a microphone of the user terminals;
performing speech recognition on a spoken voice input through the microphone by using the multilingual speech recognition model; and
specifying a spoken language based on a result of the speech recognition and automatically configuring the personal language of the user terminals based on the specified spoken language.

10. The method of claim 1, further comprising transmitting a subtitle comprising a result of translating the audio data to the remaining user terminals.

11. The method of claim 10, wherein the subtitle is transmitted as being included in media data.

12. A computer-readable storage medium storing instructions configured, when executed by the processor, to cause a device comprising a processor to implement a specific operation for providing a video communication service, the specific operation comprising:
an operation of configuring a personal language corresponding to each of a plurality of user terminals;
an operation of receiving media data from a first user terminal among the plurality of user terminals;
an operation of performing speech recognition on audio data included in the media data;
an operation of detecting a personal language of remaining user terminals except the first user terminal; and
an operation of translating a speech recognition result of the audio data, based on the detected personal language.

13. A computing device comprising one or more processors that execute a plurality of operations for providing a video communication service and one or more memories that store a plurality of commands to execute the plurality of operations, the plurality of operations comprising:
an operation of configuring a personal language corresponding to each of a plurality of user terminals;
an operation of receiving media data from a first user terminal among the plurality of user terminals;
an operation of performing speech recognition on audio data included in the media data;
an operation of detecting a personal language of remaining user terminals except the first user terminal; and
an operation of translating a speech recognition result of the audio data, based on the detected personal language.

14. The computing device of claim 13, wherein the operation of performing the speech recognition comprises:
an operation of detecting a personal language of the first user terminal;
an operation of selecting a speech recognition model corresponding to the detected personal language among a plurality of speech recognition models; and
an operation of performing speech recognition on the audio data by using the selected speech recognition model.

15. The computing device of claim 13, wherein the plurality of operations further comprises an operation of transmitting a subtitle comprising a result of translating the audio data to the remaining user terminals.
